# EUROPEAN PATENT APPLICATION

(11) **EP 3 725 377 A1**
(43) Date of publication of application: **21.10.2020**
(21) Application number: 19212793.4
(22) Date of filing: 02.12.2019
(51) Int. Cl.: A62D 1/00, A62C 2/00

(54) **METHOD AND APPARATUS FOR INHIBITING CORROSION FROM FIRE SUPPRESSION AGENTS IN SITU**

(30) Priority: 19.04.2019 US 201916388975; 15.05.2019 US 201916413100
(71) Applicant: Kidde Technologies, Inc., Wilson, NC 27896 (US)
(72) Inventor: SIMPSON, Terry, Wake Forest, NC North Carolina 27587 (US); CHATTAWAY, Adam, Old Windsor, Berkshire SL4 2QG (GB)
(74) Representative: Dehns

(57) **Abstract**

Disclosed herein is a method and apparatus for inhibiting corrosion of a fire extinguisher container which contains a fire suppression agent that includes CF₃I.

## Description

### CROSS REFERENCE TO RELATED APPLICATIONS

This application is a continuation in part of U.S. Patent Application No. 16/388,975 filed on April 19, 2019 which is incorporated herein by reference in its entirety.

### BACKGROUND

Exemplary embodiments of the present disclosure pertain to the art of fire suppression agents.

Halon 1301 has frequently been employed as a fire suppression agent but there is currently a desire to replace Halon 1301 with more environmentally friendly fire suppression agents or blends of agents. Some of the proposed alternatives to Halon 1301 are less stable than Halon 1301 and the degradation products can result in corrosion of the container. Solutions are needed that allow the alternative fire suppression agents to be stored in the fire extinguisher system for extended periods of time.

### BRIEF DESCRIPTION

Disclosed is a method for inhibiting corrosion of a fire extinguisher container including substantially continuously contacting a fire suppression agent in the fire extinguisher container with a corrosion inhibiting composition wherein the fire suppression agent includes CF₃I and the corrosion inhibiting composition includes a zeolite and an iodine reactive metal selected from the group consisting of silver, copper and alloys comprising at least one of the foregoing.

In addition to one or more of the features described above, or as an alternative to any of the foregoing embodiments, the corrosion inhibiting composition is located in an inhibitor container having a plurality of openings sized to contain the zeolite within the inhibitor container and the inhibitor container is located in the fire extinguisher container.

In addition to one or more of the features described above, or as an alternative to any of the foregoing embodiments, the zeolite is doped with the iodine reactive metal.

In addition to one or more of the features described above, or as an alternative to any of the foregoing embodiments, the openings are sized to contain particles of the iodine reactive metal.

In addition to one or more of the features described above, or as an alternative to any of the foregoing embodiments, the inhibitor container includes the iodine reactive metal.

In addition to one or more of the features described above, or as an alternative to any of the foregoing embodiments, the fire suppression agent has a gas phase and a liquid phase in the fire extinguisher container and the corrosion inhibiting composition substantially continuously contacts both phases.

In addition to one or more of the features described above, or as an alternative to any of the foregoing embodiments, the zeolite has openings with a maximum opening size of 3 to 5 angstroms.

In addition to one or more of the features described above, or as an alternative to any of the foregoing embodiments, the CF₃I is present in an amount greater than or equal to 30 wt%, based on the total weight of the fire suppression agent.

In addition to one or more of the features described above, or as an alternative to any of the foregoing embodiments, the zeolite is present in an amount of 0.1 to 1 weight percent (wt%), based on the amount of CF₃I.

In addition to one or more of the features described above, or as an alternative to any of the foregoing embodiments, the iodine reactive metal is present in an amount of 1 to 2 weight percent, based on the amount of CF₃I.

Also disclosed is an apparatus for inhibiting corrosion of a fire extinguisher container. The apparatus includes an inhibitor container disposed within the fire extinguisher container. A zeolite and an iodine reactive metal selected from the group consisting of silver, copper, and alloys comprising at least one of the foregoing are disposed within the inhibitor container. The inhibitor container has a plurality of openings sized to contain the zeolite within the inhibitor container and allow substantially continuous contact with a fire suppression agent. The fire suppression agent includes CF₃I.

In addition to one or more of the features described above, or as an alternative to any of the foregoing embodiments, the zeolite is doped with the iodine reactive metal.

In addition to one or more of the features described above, or as an alternative to any of the foregoing embodiments, the inhibitor container openings are sized to contain particles of the iodine reactive metal.

Also disclosed is an apparatus for inhibiting corrosion of a fire extinguisher container including an inhibitor container disposed within the fire extinguisher container. A zeolite is disposed within the inhibitor container and the inhibitor container has a plurality of openings sized to contain the zeolite within the inhibitor container and allow substantially continuous contact with a fire suppression agent. The inhibitor container includes an iodine reactive metal selected from the groups consisting of silver, copper and alloys comprising at least one of the foregoing. The fire suppression agent includes CF₃I.

In addition to one or more of the features described above, or as an alternative to any of the foregoing embodiments, the zeolite is present in an amount of 0.1 to 1 wt%, based on the amount of CF₃I.

In addition to one or more of the features described above, or as an alternative to any of the foregoing embodiments, the zeolite has openings with a maximum opening size of 3 to 5 angstroms.

### BRIEF DESCRIPTION OF THE DRAWINGS

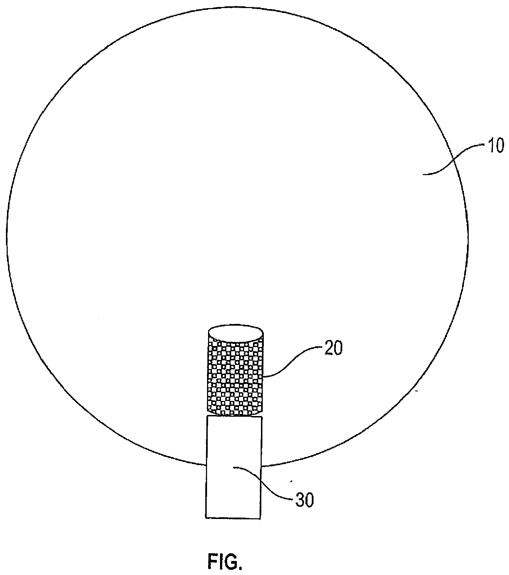

The following descriptions should not be considered limiting in any way. With reference to the accompanying drawing, like elements are numbered alike:

The Figure is a schematic representation of an apparatus for stabilizing a fire suppression agent.

### DETAILED DESCRIPTION

A detailed description of one or more embodiments of the disclosed apparatus and method are presented herein by way of exemplification and not limitation with reference to the Figure.

CF₃I and blends including CF₃I are an environmentally attractive alternative to fire extinguishing agents like Halon 1301 because CF₃I has a lower ozone depletion potential. The lower ozone depletion potential is due to the lower stability of the molecule. The lower stability (or the increased tendency to degrade) presents a challenge for long term storage of CF₃I or blends containing CF₃I as a fire suppression agent. CF₃I forms radicals as it degrades and these radicals can initiate further degradation and corrosive by products such as iodine. One approach to resolving the storage problem is to substantially continuously contact the fire suppression agent with a corrosion inhibiting composition. As used herein "substantially continuously contact" is defined as having the fire suppression agent in contact with the solid radical scavenging agent for at least 90% of the time that the fire suppression agent is stored in the fire extinguisher. The corrosion inhibiting composition includes a zeolite and an iodine reactive metal selected from the group consisting of silver, copper, and alloys comprising at least one of the foregoing.

The fire suppression agent includes CF₃I optionally in combination with one or more of HFC-125, HCFO-1233zd(e), Novec 1230, and CO₂. When used in combination with another fire suppression agent the CF₃I may be present in an amount greater than or equal to 30 wt%, or, greater than or equal to 35 wt%, or, greater than or equal to 40 wt%, based on the total weight of the fire suppression agent. Exemplary combinations are shown in the following table. The fire suppression agent may have more than one phase in the fire extinguisher container, such as a gas phase and a liquid phase.

| | |
|---|---|
| CF₃I | HFC-125 |
| 45wt% | 55wt% |
| CF₃I | Novec 1230 |
| 44wt% | 56wt% |
| CF₃I | HCFO-1233zd(e) |
| 66wt% | 34wt% |

Exemplary zeolites include zeolites having a Si/Al molar ratio greater than 1, or, greater than or equal to 1.5, or, greater than or equal to 5. Any of the foregoing zeolites may include sodium in the form of ions or atoms. The zeolite has openings which have a size across their largest dimension of 3 to 5 angstroms. In some embodiments the zeolite is doped with the iodine reactive metal described above.

In some embodiments the iodine reactive metal is present in solid form separate from the zeolite. The solid form may be as a particulate or the metal may form part or all of the inhibitor container. The iodine reactive metal may be present in an amount of 1 to 2 weight percent based on the amount of CF₃I.

The zeolite may facilitate water removal from the fire suppression agent and prevent freezing of the water during discharge which could result in blockage of the discharge apparatus. Water removal also inhibits corrosion by reducing the formation of corrosive materials such as aqueous acids. The zeolite may be present in an amount sufficient to maintain less than or equal to 10 ppm of water for greater than or equal to 5 years, or, greater than or equal to 20 years. Exemplary amounts of zeolite are 0.1 to 1 wt% based on the total amount of CF₃I.

Turning now to the Figure, an exemplary apparatus for stabilizing a fire suppression agent is shown. The apparatus includes a fire extinguisher container, 10, and an inhibitor container 20 disposed in the fire extinguisher container. The fire suppression agent is disposed within the fire extinguisher container 10. The corrosion inhibiting composition is disposed within the inhibitor container 20. The inhibitor container is shown removeably attached to the fire extinguisher bottle via the discharge/fill apparatus 30 although the inhibitor container may be removeably attached to another location in the fire extinguisher container. In some embodiments the inhibitor container is located so as to substantially continuously contact multiple phases of the fire suppression agent. It is also contemplated that multiple inhibitor containers may be present and located in different areas of the fire extinguisher container. The presence of multiple inhibitor containers may facilitate contact with multiple phases of the fire suppression agent.

In some embodiments the inhibitor container 20 is a screen tube assembly made of mesh having a grid size small enough to retain the zeolite and metal particulates (when present). In some embodiments at least part of the mesh of the inhibitor container is formed at least in part from the iodine reactive metal.

The inhibitor composition may further comprise one or more iodine donors such as high molecular weight alkyl iodide compounds, high molecular weight alkene iodide compounds and high molecular weight aromatic iodide compounds. High molecular weight iodide compounds have a melting point greater than 205°F.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method for inhibiting corrosion of a fire extinguisher container, comprising:
substantially continuously contacting a fire suppression agent in the fire extinguisher container with a corrosion inhibiting composition wherein the fire suppression agent comprises CF₃I and the corrosion inhibiting composition comprises a zeolite and an iodine reactive metal selected from the group consisting of silver, copper and alloys comprising at least one of the foregoing.

2. The method of claim 1, wherein the corrosion inhibiting composition is located in an inhibitor container having a plurality of openings sized to contain the zeolite within the inhibitor container and the inhibitor container is located in the fire extinguisher container.

3. The method of claim 2, wherein the openings are sized to contain particles of the iodine reactive metal.

4. The method of claim 1, 2 or 3, wherein the zeolite is doped with the iodine reactive metal.

5. The method of any preceding claim, wherein the iodine reactive metal is part of an inhibitor container having a plurality of openings sized to contain the zeolite within the container and the container is located in the fire extinguisher container.

6. The method of any preceding claim, wherein the amount of CF₃I is greater than or equal to 30 wt% based on the total weight of the fire suppression agent.

7. The method of any preceding claim, wherein the fire suppression agent has a gas phase and a liquid phase in the fire extinguisher container and the corrosion inhibiting composition substantially continuously contacts both phases.

8. The method of any preceding claim, wherein the zeolite is present in an amount of 0.1 to 1 wt%, based on the amount of CF₃I.

9. The method of any preceding claim, wherein the iodine reactive metal is present in an amount of 1 to 2 wt%, based on the amount of CF₃I.

10. An apparatus for inhibiting corrosion of a fire extinguisher container comprising:
an inhibitor container disposed within the fire extinguisher container; and
a zeolite and an iodine reactive metal selected from the group consisting of silver, copper, and alloys comprising at least one of the foregoing disposed within the inhibitor container; wherein the inhibitor container has a plurality of openings sized to contain the zeolite within the inhibitor container and allow substantially continuous contact with a fire suppression agent comprising CF₃I.

11. The apparatus of claim 10, wherein the zeolite is doped with the iodine reactive metal.

12. The apparatus of claim 10 or 11, wherein the inhibitor container openings are sized to contain particles of the iodine reactive metal.

13. An apparatus for inhibiting corrosion of a fire extinguisher container comprising
an inhibitor container comprising an iodine reactive metal selected from the groups consisting of silver, copper and alloys comprising at least one of the foregoing disposed within the fire extinguisher container and having ;
a zeolite disposed within the inhibitor container, wherein the inhibitor container has a plurality of openings sized to contain the zeolite within the inhibitor container and allow substantially continuous contact with a fire suppression agent comprising CF₃I.

14. The apparatus of claim 13, wherein the zeolite is present in an amount of 0.1 to 1 wt%, based on the amount of CF₃I.

15. The method or apparatus of any preceding claim, wherein the zeolite has openings with a maximum opening size of 3 to 5 angstroms.
